# DEMANDE DE BREVET EUROPEEN

(11) **EP 0 930 517 A1**
(43) Date de publication de la demande: **21.07.1999**
(21) Numéro de dépôt: 99400088.3
(22) Date de dépôt: 14.01.1999
(51) Int. Cl.: G01T 1/164

(54) **Dispositif de correction d'atténuation de transmission pour caméras de scintigraphie**

(30) Priorité: 16.01.1998 FR 9800449
(71) Demandeur: SMV INTERNATIONAL, 78530 Buc Cedex (FR)
(72) Inventeur: Nguyen, Trung, 75116 Paris (FR); Treillet, Jean, 75116 Paris (FR); Geay, Jean-Claude, 75116 Paris (FR); Roche, François, 75116 Paris (FR)
(74) Mandataire: Ballot, Paul Denis Jacques

(57) **Abrégé**

Dispositif de correction d'atténuation de transmission pour caméra scintigraphique contenant une source de rayons gamma qui balayent la surface active d'un détecteur lui faisant face à travers le corps du patient pour mesurer l'atténuation de l'énergie des photons à travers ce corps et permettre ainsi la correction de l'atténuation de l'énergie des photons émis par l'organe irradié. La source radioactive (30) est insérée dans un barreau (29) situé dans une cassette amovible (21), ce barreau étant apte à isoler automatiquement la source (30) lorsque la cassette (21) est hors de son support. Chaque dispositif est contenu dans un boîtier fixé sur le détecteur autre que celui qui lui fait face. Le barreau (29) contenant la source possède différentes formes de réalisation permettant d'y inclure des matériaux ayant leur propre coefficient d'atténuation.

Application aux gamma caméras de type double tête à statif ouvert.

## Description

La présente invention s'inscrit dans le domaine de la médecine nucléaire, qui utilise des caméras scintigraphiques également appelées gamma caméras pour obtenir des images de grande précision sur les organes d'un patient. La scintigraphie est l'information clinique obtenue par l'observation de la distribution d'une substance radioactive administrée au patient. L'observation de cette distribution (détection d'Anger) résulte en la formation d'image de l'organe examiné.

Sur les caméras à deux détecteurs, l'acquisition peut se faire soit par tomographie avec les détecteurs perpendiculaires ou parallèles tournant autour de l'organe, soit par translation des détecteurs en vis à vis de part et d'autre du corps du patient.

La non-uniformité de l'atténuation due aux coefficients d'atténuation variables, selon les tissus (os, sein, poumon, muscles...) entraîne des artefacts altérant la précision des images d'émission. Les procédés de correction d'atténuation conventionnels sont inadaptés car ils présument une répartition constante des coefficients d'atténuation. Une acquisition par transmission, utilisant une source radioactive externe, permet le calcul d'une table de coefficients d'atténuation spécifique au patient, table qui sera utilisée pour la correction de cette image d'émission. Ce procédé permet une Correction d'Atténuation de Transmission, plus connue sous l'acronyme anglo-saxon "TAC".

Le système de correction utilisé pour mettre en oeuvre ce procédé TAC comprend une source radioactive émettrice de rayons gamma d'énergie connue qui balayent la surface active du détecteur à travers le corps du patient. On mesure, dans ce détecteur, l'atténuation d'énergie provoquée par le corps du patient. Le résultat de cette mesure, convenablement traité, est une information qui permet de corriger l'atténuation de l'énergie des photons émis par l'organe irradié et d'obtenir, ainsi, une image plus précise.

La source radioactive du système TAC est une tige linéaire dont la radiation est transmise en direction du détecteur à travers un collimateur ; elle se déplace parallèlement à elle-même dans un plan parallèle à la surface de détection du détecteur.

Cette source radioactive perd progressivement au cours du temps son pouvoir de rayonnement alors que l'énergie reçue par le détecteur doit rester approximativement constante dans le temps. On dispose donc, entre la source et le collimateur, un atténuateur appartenant à une série dont les efficacités sont décroissantes. D'autre part, lorsque la source n'émet plus de rayon, elle doit être changée.

Dans l'état actuel de la technique, le changement d'atténuateur et le remplacement de la source sont des opérations délicates qui doivent être effectuées sur le site avec beaucoup de précautions par du personnel spécialisé afin de ne pas être soumis à une radiation prolongée, donc dangereuse.

L'état actuel de la technique représentée notamment par les brevets US 5.596.197 et 5.598.003 qui traitent du sens de balayage dans des conditions bien particulières ne répond pas aux problèmes soulevés.

La présente invention remédie à ces inconvénients en sécurisant l'échange de la source et des atténuateurs du système TAC.

Selon l'invention, le dispositif de Correction d'Atténuation de Transmission pour caméra scintigraphique comprend un chariot mobile en translation, ce chariot étant pourvu d'une articulation pour un support apte à se replier dans un boîtier ou de se déplier perpendiculairement, caractérisé en ce qu'il reçoit une cassette amovible contenant une source radioactive.

Dans la cassette, la source radioactive est insérée dans la gorge longitudinale d'un barreau cylindrique en matériau isolant pour les rayons gamma ; cette gorge étant apte à se placer, par rotation du barreau, soit devant une paroi isolante, soit devant un canal de sortie du rayonnement.

La rotation du barreau est commandée par un mécanisme motorisé qui comprend un pignon menant solidaire du moteur et un pignon mené relié au barreau par un assemblage coulissant.

Les deux pignons sont maintenus écartés par un premier ressort et l'engrènement, provoqué par une impulsion manuelle, est maintenu par un organe électrique, tel qu'un électroaimant de sorte que, en l'absence de courant, les pignons sont obligatoirement désengagés.

Le barreau est rappelé en position d'isolation de la source par un second ressort.

Lors de l'assemblage de la cassette sur son support, un système mécanique qui immobilise le barreau en position d'isolation est actionné pour autoriser sa rotation.

L'extrémité du barreau a la forme d'une clef qui ne peut pénétrer dans le trou du support, ou en sortir, que si ledit barreau est en position d'isolation dans la cassette.

Sur les caméras scintigraphiques double tête à statif ouvert, les dispositifs TAC sont inclus dans des boîtiers fixés sur les détecteurs ; chaque dispositif TAC agissant, lorsqu'il est déplié, sur le détecteur qui lui fait face.

Le barreau est composé de secteurs ayant des coefficients d'atténuation différents qui entourent la source et forment un cylindre cerclé ou inséré dans un tube en matériau transparent au rayonnement.

En variante, le barreau contenant la source est décomposé en segments en matériau opaque espacés par des réglettes ayant des coefficients d'atténuation différents.

Les caractéristiques et avantages de l'invention apparaîtront à la lecture de la description qui suit d'un exemple de réalisation non limitatif en référence aux dessins annexés sur lesquels :
- la figure 1 représente une vue générale de la caméra double tête à statif ouvert équipée d'un dispositif TAC sur chacun des détecteurs, l'un en position de travail et l'autre en position repos ;
- la figure 2 est un exemple de motorisation du chariot supportant le dispositif TAC en cours de balayage ;
- la figure 3 montre le dispositif TAC rangé dans son logement ;
- la figure 4 est une représentation schématisée en coupe longitudinale de la cassette ;
- la figure 5 est une coupe transversale de la cassette ;
- la figure 6 est une vue en coupe de l'assemblage de la cassette sur son support ;
- la figure 7 est la vue en coupe longitudinale d'un exemple de motorisation de la rotation du barreau contenant la source et de son rappel automatique en position fermée ;
- la figure 8 est une vue en coupe transversale de cette motorisation en cours de fonctionnement ;
- la figure 9 est une vue en coupe transversale de cette motorisation au repos ; et
- les figures 10a et 10b montrent deux exemples de réalisation du barreau contenant la source.

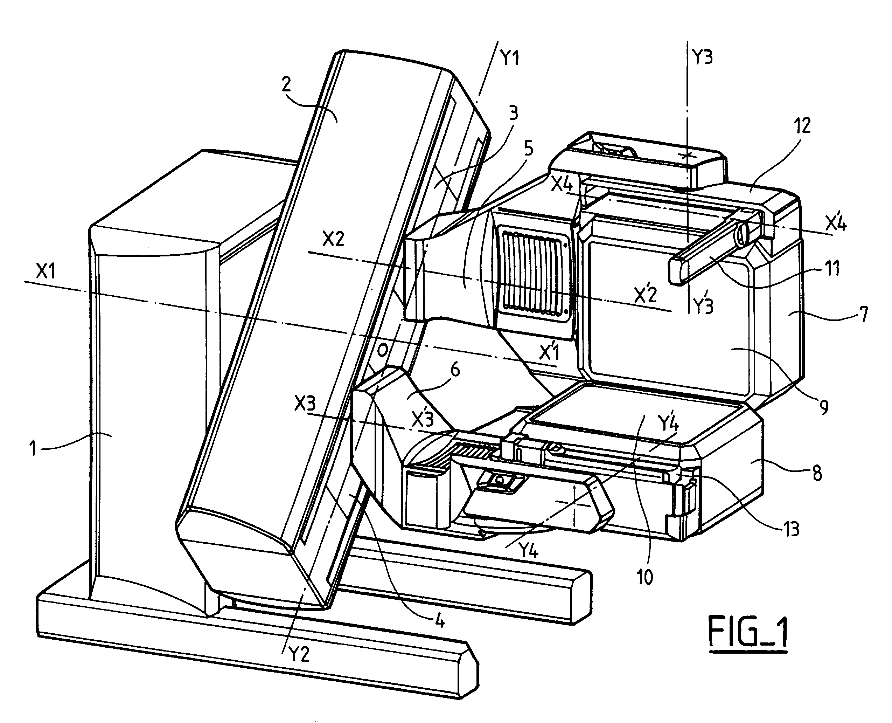

Sur la figure 1, la gamma caméra se compose d'un bâti (1) supportant une embase tournante (2) qui reçoit des chariots (3) (4) équipés respectivement de deux supports (5)(6) de détecteurs (7)(8) dont les surfaces de détection sont référencées (9)(10).
- L'embase (2) tourne autour de l'axe X1 X'1 ;
- Les chariots (3) et (4) se déplacent linéairement selon les directions OY1 OY2 ;
- Les supports de détecteurs tournent respectivement autour des axes X2 X'2 et X3 X'3 ;
- Les détecteurs tournent respectivement autour des axes Y3 Y'3 et Y4 Y'4.

On voit donc que les détecteurs peuvent prendre toute position à l'intérieur d'un certain espace et en particulier être perpendiculaires comme sur la figure ou parallèles face à face, etc.

Un premier dispositif TAC (11) selon l'invention est contenu dans un boîtier (12) solidaire du détecteur (7) et envoie son rayonnement sur la surface de détection (10) du détecteur (8) tandis qu'un deuxième dispositif TAC (13) représenté en position repliée, agirait, s'il était ouvert, sur la surface (9) du détecteur (7).

Le dispositif TAC (11) se déplace suivant l'axe X4X'4 de sorte que les rayons gamma émis balayent toute la surface (10) du détecteur (8).

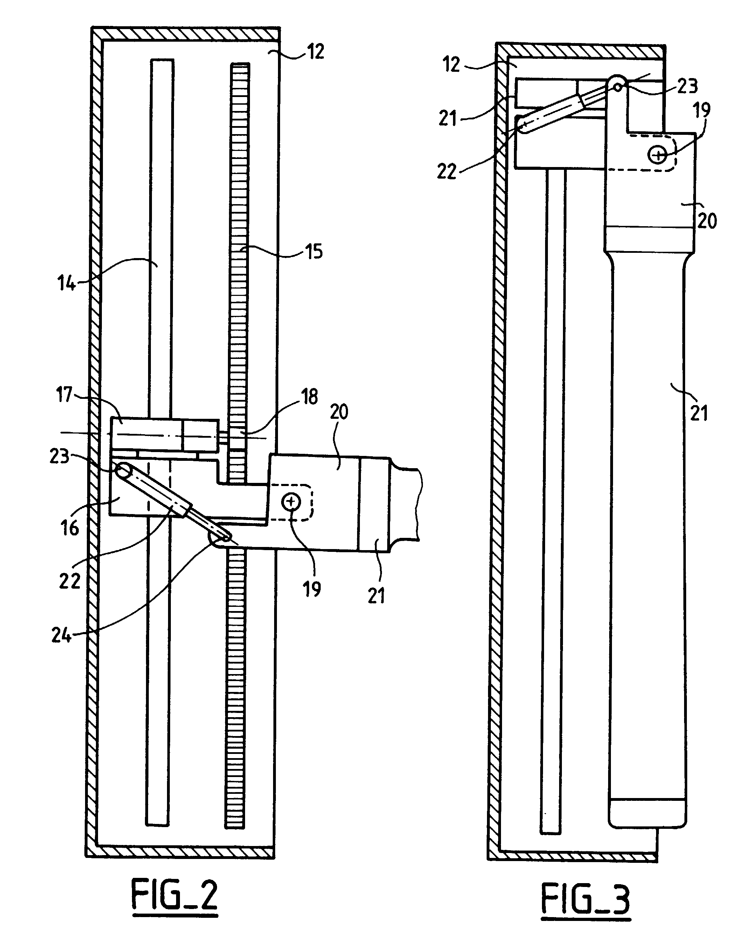

La figure 2 reprend le boîtier (12) dans lequel sont fixées une rampe de guidage (14) et une crémaillère (15) ; un chariot (16) peut coulisser sur la rampe (14) tandis qu'un motoréducteur (17) entraînant un pignon (18) engrène sur la crémaillère (15) ; le chariot (16) possède un axe d'articulation (19) pour un support (20) d'une cassette (21). Ce support est maintenu en position perpendiculaire à la ligne de déplacement à l'aide d'un ressort de compression (22) qui peut être avantageusement un ressort à gaz articulé entre les axes (23) et (24). La course du chariot est délimitée par des contacts électriques de fin de course et des butées mécaniques non représentées.

La figure 3 montre la cassette (21) rangée dans son logement et maintenue en place par le ressort (22) qui, au cours de la rotation du support (20) s'est d'abord comprimé jusqu'au franchissement d'une ligne droite joignant les axes (23) et (19) puis détendu jusqu'à la position représentée en exerçant une poussée sur l'axe (23).

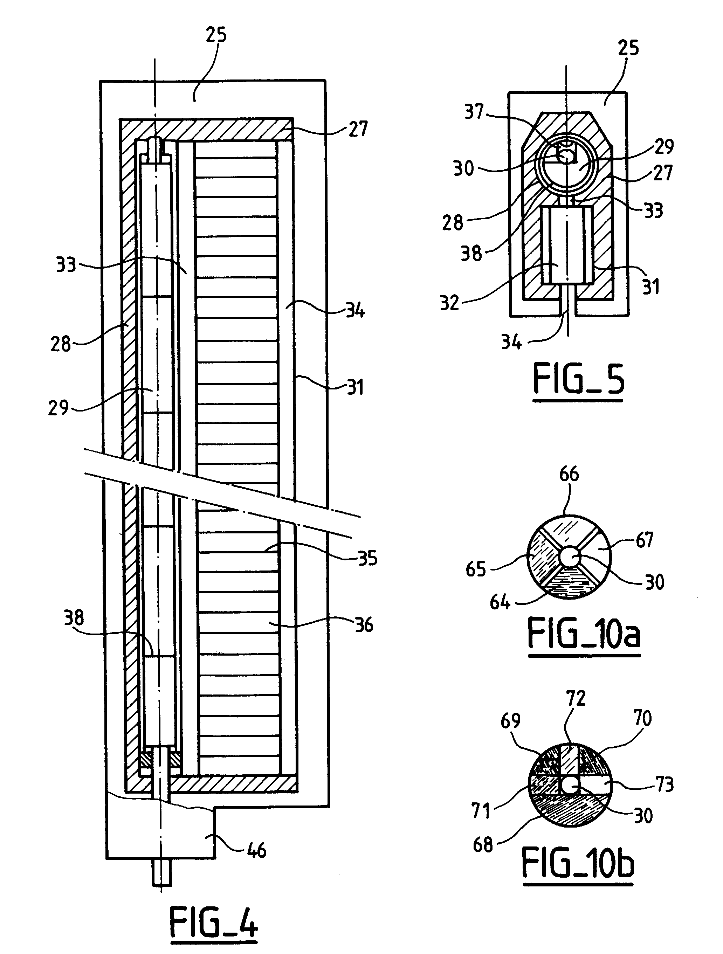

Les figures 4 et 5 représentent une cassette constituée d'une enveloppe (25) en matériau léger tel qu'un alliage d'aluminium ou une matière plastique renfermant une enceinte (27) en plomb ou toute autre matière opaque au rayonnement; cette enceinte (27) comprend, d'une part, un logement cylindrique (28) dans lequel peut tourner un barreau également cylindrique (29) contenant une source radioactive (30) et , d'autre part, un logement à section rectangulaire (31) contenant un collimateur (32) communiquant avec un logement cylindrique (28) par un canal (33) et avec l'extérieur par le canal (34). Le collimateur (32) est constitué d'une alternance de lamelles (35) en matériau opaque au rayonnement et d'entretoises (36) en matériau transparent tel que du PVC.

Le barreau cylindrique (29) peut avoir des aménagements divers pour loger la source radioactive (30) mais, sur la figure 5, c'est un barreau en matériau isolant tel que le tungstène dans lequel on a usiné une gorge rectiligne (37) pour loger la source (30), laquelle est maintenue en place par un ou plusieurs joncs (38). Lorsque le barreau (29) est dans la position dite fermée représentée sur la figure 5, la source est parfaitement isolée par le tungstène du barreau (29) et le plomb de l'enceinte (27) ; comme le barreau est sans jeu dans son logement, il ne peut se produire aucune fuite de rayonnement. Par contre, lorsque l'on a tourné le barreau (29) d'un demi-tour pour le mettre en position dite ouverte, la source (30) se trouve en face du canal (33) et émet son rayonnement à travers le collimateur (32) et le canal (34). Il convient de noter que ce canal (34) peut recevoir un obturateur en matériau transparent pour empêcher l'introduction des poussières. La mise en position ouverte par rotation de ce barreau (29) doit être assortie de précautions afin que l'émission radioactive ne puisse se produire à travers le canal (34) que lorsque la caméra est opérationnelle avec son dispositif TAC.

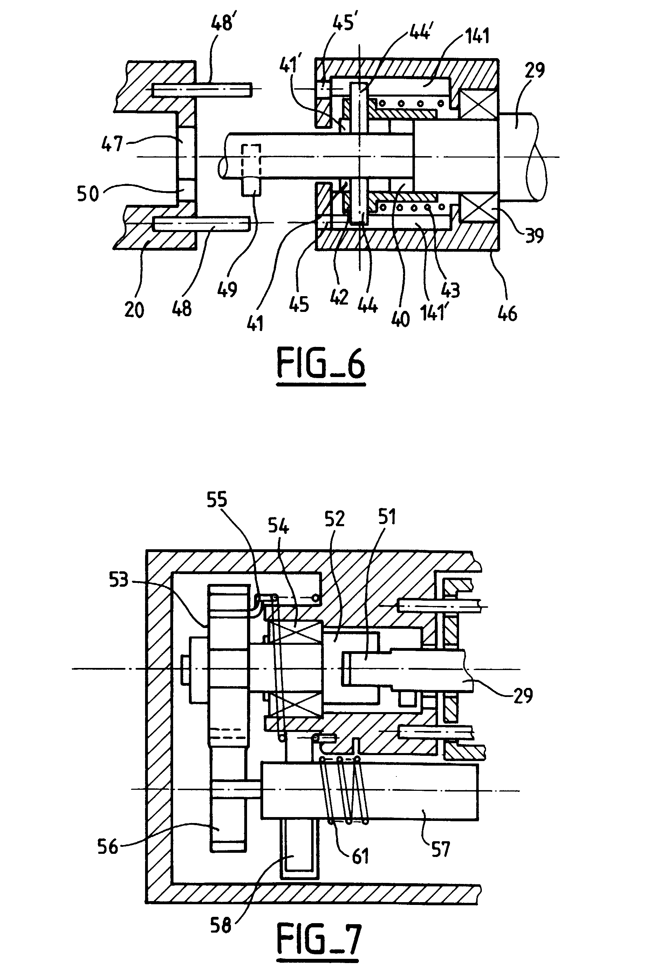

La figure 6 illustre un dispositif assurant que la cassette, hors de son logement, est obligatoirement en position fermée et qu'elle ne peut être ouverte que lorsqu'elle est en place sur son support. A cet effet, et à titre d'exemple non limitatif, l'extrémité du barreau (29) tournant dans un palier (39) reçoit une gorge circulaire (40) et au moins deux gorges longitudinales (41)(41'). Un fourreau concentrique (42) rappelé par un ressort (43) est solidaire d'au moins deux goupilles (44)(44') pénétrant dans les gorges (41)(41') du barreau (29) et dans des gorges (141)(141') d'un canon (46). On ne peut accéder à ces goupilles que par des trous (45)(45') pratiqués dans le canon (46). Au repos, le barreau (29) est donc immobilisé en rotation par rapport au canon (46). En contre-partie, le support (20) de la cassette possède un nombre égal de goupilles (48)(48') qui, lors de l'introduction de la cassette pénètrent dans les trous (45) (45') et poussent les goupilles (44) (44') qui viennent se loger dans la gorge circulaire (40) du barreau (29) permettant ainsi sa rotation. Ce barreau (29), dans son prolongement, reçoit, en outre, une goupille (49) qui agit à la manière d'une clef dans un trou de serrure et empêche l'extraction de la cassette lorsqu'elle n'est pas en position fermée.

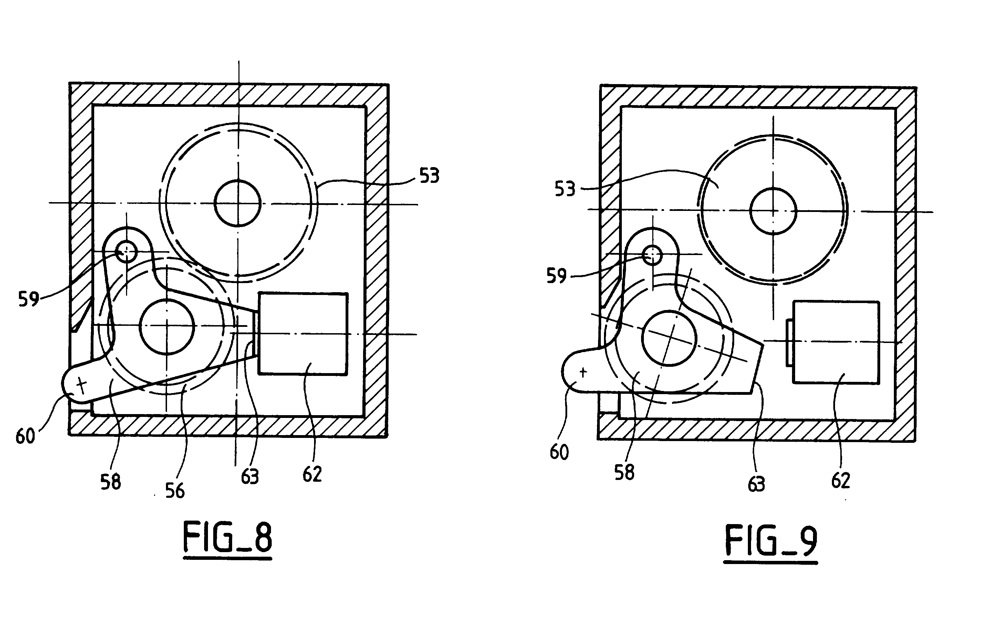

Les figures 7, 8 et 9 représentent la motorisation de rotation du barreau (29) dont l'extrémité possède un système d'accouplement coulissant tel que, par exemple, deux méplats (51) pénétrant dans une chape (52) solidaire d'un pignon (53) ; cet ensemble tourne dans un palier (54) et un ressort de torsion (55) ramène toujours le pignon dans la position d'isolation du barreau (29). Le pignon (53) peut engrener sur un second pignon (56) solidaire d'un motoréducteur (57). A cette fin, cet ensemble est monté sur un levier (58) articulé en (59). Ce levier permet de rapprocher le pignon (56) du pignon (53) lorsqu'on exerce une poussée sur son extrémité (60) à l'encontre d'un ressort de rappel (61) ; le maintien en position d'engrènement est obtenu grâce à l'électroaimant (62) qui attire et colle sur lui une face (63) du levier (58).

Le fonctionnement est le suivant : au repos, le barreau est en position fermée, maintenue par le ressort (55) ; lorsqu'on veut utiliser le dispositif TAC, l'ordinateur de commande du système scintigraphique autorise son ouverture en excitant l'électroaimant (62). L'opérateur peut alors enfoncer la touche (60) jusqu'au collage de la face (63) sur l'électroaimant (62), ce qui assure l'engrènement des deux pignons (56) et (53). L'ordinateur commande ensuite le motoréducteur (57) qui provoque l'ouverture du barreau puis le motoréducteur (17) qui provoque le mouvement de balayage du dispositif TAC. S'il y avait une coupure de courant en cours d'opération, l'électroaimant (62) relâcherait le levier (58), le pignon (53) serait libéré et le ressort (55) ramènerait le barreau (29) en position fermée. En fonctionnement normal, lorsque l'opération est terminée, le motoréducteur (57) ramène le barreau en position fermée et c'est seulement ensuite que l'électroaimant (62) libère le levier (58) rappelé en position écartée par son ressort (61).

Les figures 10a et 10b représentent deux exemples de réalisation du barreau (29) tandis que sur la figure 5, on a représenté le barreau le plus simple mais il est aussi possible de le réaliser en le dotant d'atténuateurs. Ces atténuateurs ont pour but de compenser la perte d'énergie de la source dans le temps en l'égalisant à son niveau minimum acceptable par des atténuations successives décroissantes. A cet effet, le barreau est divisé en secteurs aptes à se placer devant l'orifice de sortie du rayonnement; chaque secteur a ainsi sa fonction: fermeture, atténuateur 1, atténuateur 2, etc. On peut, par exemple réaliser des secteurs (64) (figure 10a) en matériau opaque, (65) en matériau très peu transparent, (66) en matériau plus transparent et (67) en matériau ne représentant aucune atténuation. Une autre réalisation, sur la figure 10b, relève du même principe mais le barreau est décomposé en segments (68) (69) (70) en matériau opaque espacés par des réglettes de section rectangulaire (71) peu transparente, (72) plus transparente et (73) totalement transparente. L'utilisation d'un barreau de l'un de ces types ou d'un type analogue nécessite naturellement que la rotation s'effectue par quart de tour, ce qui peut être obtenu aisément soit en plaçant des contacts fin de course appropriés, soit à l'aide d'un codeur monté sur le pignon (53).

Le dispositif TAC selon l'invention qui vient d'être décrit permet notamment une plus grande sécurité de manipulation de la source radioactive.

## Revendications

1. Dispositif de correction d'atténuation de transmission pour caméra scintigraphique comportant un chariot (16) mobile en translation, ce chariot étant pourvu d'une articulation (19) pour un support (20) apte à se replier dans un boîtier (12) ou de se déplier perpendiculairement, caractérisé en ce qu'il reçoit une cassette (21) amovible contenant une source radioactive (30).

2. Dispositif selon la revendication 1, caractérisé en ce que, dans la cassette (20), la source radioactive est insérée dans une gorge longitudinale (37) d'un barreau cylindrique (29) en matériau isolant pour les rayons gamma, cette gorge étant apte à se placer, par rotation du barreau, soit devant une paroi isolante (27) , soit devant un canal de sortie (33) du rayonnement.

3. Dispositif selon la revendication 2, caractérisé en ce que la rotation du barreau est commandée par un mécanisme motorisé qui comprend un pignon menant (56) solidaire d'un moteur (57) et un pignon mené (53) relié au barreau (29) par un assemblage coulissant (51) (52),
- en ce que les deux pignons (53),(56) sont maintenus écartés par un premier ressort et,
- en ce que l'engrènement, provoqué par une impulsion manuelle sur un poussoir (60), est maintenu par un organe électrique, tel qu'un électro-aimant (62) de sorte que, en l'absence de courant, les pignons sont désengagés.

4. Dispositif selon l'une des revendications précédentes, caractérisé en ce que le barreau (29) est rappelé en position d'isolation de la source par un second ressort (55).

5. Dispositif selon l'une des revendications précédentes, caractérisé en ce que, lors de l'assemblage de la cassette sur son support, un système mécanique, tel que des goupilles ou pièces analogues (44)(44') prisonnières dans des gorges longitudinales (41)(41') du barreau (29) et (141)(141') d'un canon (46) de cassette, qui immobilise le barreau en position d'isolation est actionné en repoussant lesdites goupilles ou pièces analogues dans une gorge circulaire (40) pour autoriser la rotation dudit barreau.

6. Dispositif selon l'une des revendications précédentes, caractérisé en ce que l'extrémité du barreau (25) a la forme d'une clef (49) qui ne peut pénétrer dans un trou (47) du support (20) ou en sortir que si ledit barreau est en position d'isolation dans la cassette.

7. Dispositif selon l'une des revendications précédentes, caractérisé en ce que le barreau (29) est composé de secteurs (64) (65) (66) (67) entourant la source radioactive (30), ayant des coefficients d'atténuation différents et formant un cylindre cerclé ou inséré dans un tube en matériau transparent au rayonnement.

8. Dispositif selon l'une des revendications précédentes, caractérisé en ce que le barreau (29) contenant la source radioactive (30) est décomposé en segments (68)(69)(70) en matériau opaque espacés par des réglettes (71) (72) (73) ayant des coefficients d'atténuation différents.

9. Gamma caméra du type double détecteur à statif ouvert, caractérisée en ce que chaque détecteur est équipé d'un dispositif selon l'une des revendications précédentes, ledit dispositif étant apte, lorsqu'il est déplié, à agir sur le détecteur qui lui fait face.
